# EUROPEAN PATENT APPLICATION

(11) **EP 1 106 546 A2**
(43) Date of publication of application: **13.06.2001**
(21) Application number: 00204365.1
(22) Date of filing: 08.12.2000
(51) Int. Cl.: B65G 53/06, B65D 88/08

(54) **Device and method for bulk delivery of ground or granular products to small-scale consumers**

(30) Priority: 10.12.1999 NL 1013821
(71) Applicant: Meneba Meel B.V., 3081 AB Rotterdam (NL)
(72) Inventor: Scholtes, Franciscus Adrianus Johannes, 1721 GP Broek op Langedijk (NL)
(74) Representative: Lips, Hendrik Jan George, Ir.

(57) **Abstract**

The invention relates to a system for bulk delivery of ground or granular products to, and storage thereof with, small-scale consumers, to which end containers (1) to be assembled in modules are provided which can be completely adapted to the space available at the small-scale consumer's, as well as a weighing and discharging member (28) to be connected to it. The pneumatic transport and filtering means required for filling the containers are fixedly or removably mounted on bulk transport vehicles and are under management of the bulk supplier. The containers (1) at the small-scale consumers are provided with weighing members (20) of which the measuring signals are also supplied to a processing unit of the bulk supplier, in which according to a method it is provided for that the stock control is at least partly in the hands of the bulk supplier.

## Description

The invention relates to a device and a method for bulk delivery of ground or granular products to small-scale consumers, in which one can think of bulk delivery of flour products to smaller bakeries, such as the old-fashioned bakeries.

Up to now, such small-scale consumers are provided with the required flour by delivery in sacks. This is a rather labour-intensive method, since the flour must first be transferred into sacks at the bulk supplier's or at the transshipment terminal, in which additionally the amounts per sack must be weighed exactly. Subsequently, the sacks must be loaded onto a transport vehicle, must be brought to the small-scale consumers, and there, mostly through manual force with perhaps a sack barrow as aid, be delivered in the bakery. For the total amount of flour which can be stored at a small-scale consumer's, the mostly very limited space will be the decisive factor, and not the consumption rate of the flour products at the small-scale consumer. Although piling-up high of the sacks of flour might provide a solution, this is not an actual option, given the heavy and possibly dangerous work of piling-up and removing such an amount of sacks.

The object of the invention is to remove the difficulties associated with a system of delivery in sacks, and to provide for a bulk delivery system which is suitable for the small-scale consumer. Then, the most important aspects are that firstly, the containers for the product must be such that they can be positioned at the small-scale consumer's, and secondly, that the initial costs of the system are within the budget of the small-scale consumer.

Thus, according to the invention, a device for bulk delivery of ground or granular products is provided, comprising at least one container, one bearing frame for the container, a filling opening, a vent opening, a discharge opening and means of transport connected to said discharge opening for moving the product(s) further from said device.

Such containers are known per se but due to their size and structure they are not suitable for storage in said usually limited spaces of small-scale consumers. Therefore, according to the invention it is provided for, that the container is composed of a bottom part having the discharge opening, a top part having the filling opening and the vent opening, the intermediate part situated between bottom and top part being composed of one or more connecting intermediate sections, which can have a number of different lengths. Preferably, it is also provided for, that one can at least choose from a number of different diameters for top part and intermediate part.

Through this, it is achieved that the final container can be brought to the destination in or at the bakery in parts, and subsequently be assembled on the final standing place. With the possibility of chosing from the various lengths of the intermediate sections and the various diameters of the containers, it is possible to always assemble the largest possible container for the available space.

According to the invention, the filling opening and vent opening provided in the top part are both connected to a tube or hose system which extends to outside the bakery or can be brought outside the bakery on a location that can be reached by a bulk transport vehicle by which the product is supplied. In order to be able to fill the relatively small containers often having a limited diameter as well as possible employing the usual pneumatic overpressure system present on such a bulk transport vehicle, there should also be a filter system for the return air which, apart from providing a proper filtering action, also has a capacity which is large enough. For proper functioning, such a filtering system will mostly have to be provided with an underpressure member, such as a fan, for example, in order to meet those requirements.

Apart from the fact that with said filtering system, the investment cost of the small-scale consumer would have to be disproportionately higher, the space required for the filtering system is often a problem as well, since this space will in fact be required for the container(s). Therefore, the idea according to the invention is to provide the bulk transport vehicle with a filtering system which can be used in filling the containers of the small-scale consumers. The advantages are in more space and a smaller investment for the small-scale consumer, but also in the fact that he needn't worry about maintenance of the filtering system and that he can always make use of a properly functioning filtering system. That, and the fact that the filling system and the filtering system is in one hand, the consumer can be sure that during filling, the pressure in the container will remain below a maximum acceptable value and that it is always possible to achieve a maximum possible filling of the container within that predetermined pressure range.

The bulk transport vehicle is provided with a very accurate weighing device by which the supplied amount of flour can be determined exactly. The correction for the amount of flour remaining behind in the filter is immediately incorporated in the weighing. If during filling the container of a bakery, the filter must be taken from the transport vehicle in order to facilitate connecting it to the return line, the correction is implemented after reconnecting the filtering system to the transport vehicle. However, the amount of flour remaining behind in the filter in relation to the amount delivered is negligible.

The baker does not take the required amounts of flour directly from a container; to this end he preferably uses a weighing and discharging member connecting to the further means of transport. Here, the advantages are that such a member can measure the required amount of flour accurately, and, very important, that due to its relatively limited dimensions, such a member, as opposed to the containers, mostly can be positioned directly in the bakery.

For accurately measuring the required amount of flour, it is important that the amount of flour provided from the container by the usually pneumatic means of transport can be supplied in a more or less constant flow. To that end, according to the invention, a vibrating member coupled to the bottom part of the container and a dose-measuring member are provided. Such a dose-measuring member can e.g. consist of a number of compartments mounted along the circumference of a driven shaft. Due to the action of the vibrating member the compartments will be filled completely as long as there is sufficient stock and movement of the compartments within a closed housing between at least the filling side and the discharge side of the dose-measuring member will always cause an equal amount of flour per time unit to be supplied to the further means of transport.

For proper functioning of the vibrating member, it is provided for that a container rests on the bearing frame with an intermediate part, which is preferably the intermediate part situated immediately above the bottom part, and that a flexible connection is provided between the bottom part and the subsequent intermediate part. In order to make it possible that the bottom part is also capable of supporting the full load of a completely filled container, a number of connecting rods have been mounted between the bottom part and the subsequent intermediate part, the outer ends of the connecting rods being coupled to the bottom part and the subsequent intermediate part through damping means. A bottom part fastened in this way can carry the complete load and is at the same time suspended freely enough to be capable of vibrating the load of flour present in the container.

Since the vibration generated with the vibrating member will be transferred to a certain extent onto the container itself through the flexible connection, the connecting rods and the contents of the container, it is provided for that vibration dampers are mounted between the bearing frame of the container and the base supporting the bearing frame.

These vibration dampers are preferably flexible dampers, which gives the further advantage that the extent to which said dampers will be compressed by the container plus contents is a direct measure for the weight of the amount of flour present in the container. Due to this, it is possible to mount a weighing member in a simple way between the bearing frame and the base on which the bearing frame has been positioned. To this end, additionally, a framework mounted between the legs of the bearing frame and enabling positioning of the weighing member in the centre below the container is provided.

Such a weighing member can consist of a so-called load cell issuing a signal in dependence of the weight. The accuracy of a load cell mounted in such a way may not be high enough in all cases for being able to properly measure the desired amounts per bakery product to be prepared, it is however amply sufficient to track the contents of the container and also to determine when a new bulk load should be supplied.

Weighing the amount of flour product to be used takes place, as already stated, at the weighing and discharging member. Such a member can substantially consist of a bunker suspended at a distance above the ground, with at least one weighing member mounted between the bunker and the point of suspension, and a discharge valve being mounted in the bottom side of the bunker.

On discharging a weighed-off amount of flour into e.g. a movable dough tub, a small amount of flour will always be blown off. In order to prevent the blown-off flour from dispersing into the free space and thus from causing damage to the personnel in the bakery, according to the invention it is provided for, that a screening cap is mounted at the bottom side of the weighing and discharging member, with means being provided for applying an underpressure underneath the cap. Such a cap is e.g. designed in such a way, that it can closely connect to the movable dough tub. For applying an underpressure, one preferably employs part of the pneumatic means of transport by which the flour can be transported from a container to the weighing and discharging member.

For stock control, it is provided for, that one or more of the weighing members is/are connected to a control/processing unit, said control/processing unit being arranged to pass the measuring signals from the weighing members to a further processing unit, in a processed or non-processed state.

First of all, this causes the data concerning the contents of the container or containers to be supplied to the control/processing unit of the bakery at predetermined points of time, so that consumption and stock is always known. By providing for that these data, or the data of a certain moment, of the control/processing unit of the bakery can be transferred to the control/processing unit of the bulk supplier through e.g. a modem, an important part of the stock control can be accommodated at the bulk supplier's. Judging from those data, a bulk supplier can determine which small-scale consumers should be provided with a new bulk supply the next day, in which the data need not necessarily be limited to the contents of the container or containers present at a baker's, but can also comprise orders for e.g. other types of flour entered by the baker. Judging the required amounts, types of flour and the locations of the small-scale consumers, the bulk supplier can then make a plan for the routes to be followed by the bulk transport vehicles.

With such a stock control, which will be in the hands of the bulk supplier for a major part, the small-scale consumer can be assured that the bulk supplier will always know in time when and which amounts are required. Since he is timely informed of the required amounts of one or more types of flour, the bulk supplier can make the most efficient provisioning plan, so that unnecessary rides, like e.g. in the worst case two times in one day to the same small-scale consumer, will no longer occur.

The invention also comprises a method of setting up a system for bulk delivery of ground or granular products to small-scale consumers, in which the product of a transshipment is transported the small-scale consumer by means of a bulk transport vehicle, said process comprising at least the following steps:
- positioning one or more containers at the small-scale consumer's, the container or containers being adapted to the specific accommodation of each individual small-scale consumer;
- mounting a supply line and a vent line from the container or containers to a place accessible to the transport vehicle; and
- mounting a filter system (removable or not) on the transport vehicle, for connecting the vent line of the container or containers to.

The invention also comprises a method of bulk delivery to small-scale consumer after having made the necessary provisions at the small-scale consumer's for being capable of receiving the flour in bulk. This method comprises the steps in which:
- the weight of the contents of the container or containers at the small-scale consumers is measured per time unit on one or more predetermined points in time;
- the measuring data of the small-scale consumers are supplied to a processing device of the transshipment/transport company; and
- per predetermined group of small-scale consumers, one or more provisioning routes is determined on the basis of the measuring data.

Further, it is preferably provided for, that the measuring data from a processing device of the small-scale consumer are provided automatically to the transshipment/transport company on one or more predetermined points in time, through a connection or network suitable for data transport.

The invention is further explained by way of the example given in the drawing, in which:
Fig. 1 illustrates an arrangement having two containers and a weighing and discharging member;
Fig. 2 illustrates a further embodiment of the weighing and discharging member; and
Fig. 3 illustrates schematically a possible network for passing on the data necessary for stock control.

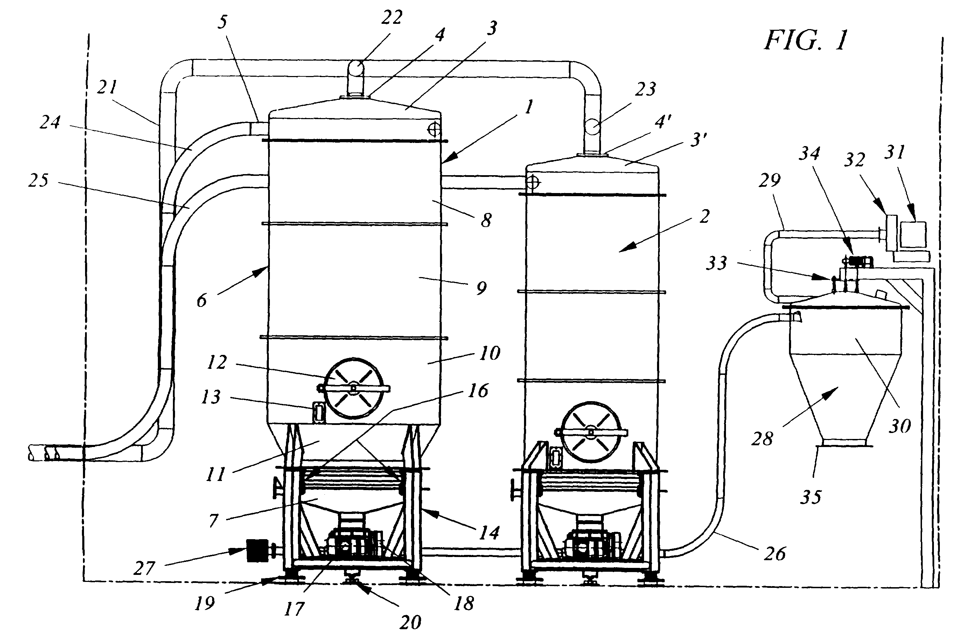

Fig. 1 shows two containers 1, 2 of different sizes, the size e.g. depending on the available positioning space, but e.g. also on the available positioning space and the type(s) of flour which is/are to be kept in stock.

The containers 1, 2 substantially consist of a top part 3, having a filling opening 4 and a vent opening 5, an intermediate part 6 and a bottom part 7. The intermediate part is composed of a number of segments 8, 9, 10 of circular-cylindrical cross-section. The lowermost segment 10 is provided with an inspection window 12 and a looking glass 13. The lowermost segment 10 of container 1 has a tapered portion 11 extending from the larger diameter of container 1 to a diameter corresponding to the diameter of container 2. Due to this, it is possible to provide the containers 1, 2 with one and the same universal format bottom part 7.

Therefore, bearing frame 14 can be substantially equal for both containers, except for the direct connecting parts with the container. The same goes for all further members connected to the bottom part 7 and/or mounted on the bearing frame 14.

The bottom part 7 is connected to the lowermost segment 10 through a flexible sleeve 15, in which bolts 16 having damping means provide for the actual suspension of the bottom part 7 to the segment 10. Underneath and connected to the bottom part 7, a vibrating member 17 has been mounted, which can easily transfer the vibration onto the flour stock due to the flexible suspension of said bottom part. Owing to this the dose-measuring member 18 connecting to said bottom part can be fed continuously, thereby causing an extremely uniform transport of a container to the weighing and discharging member to take place.

The bearing frame 14 rests on supports 19 provided with flexible damping means, so that the vibration generated by the vibrating member can not be transferred directly to the base plane. Said flexible damping means also make it possible to provide for a weighing member 20 mounted between said bearing frame 14 and the base plane. Damping means are also mounted between the weighing member 20 and the base plane. Such a weighing member 20 is e.g. a load cell which, for the relatively short range across which the damping means 19 under load of varying contents can be compressed, can still produce signal relatively accurately related to the contents.

A continuous transport line 21 extending from the outside to the topmost parts 3, 3' of the containers 1, 2, is intended to bring the flour from a bulk transport vehicle into the respective containers. This line has valves 22, 23 by means of which the line to the container to be filled can be opened. Further, the vent lines 24, 25 are connected to the topmost parts 3, 3', respectively, which lines are connected to the bulk supplier's filtering system during filling the containers. This filtering system preferably operates with underpressure so that during filling, the pressure within the container can remain amply within the set safety margin at all times.

A further transport line 26 is provided at the discharge side of the containers and has its upstream outer end provided with a pneumatic member 27 by which the flour from a dose-measuring member 18 can be blown to the bunker 30 of the weighing and discharging member 28. A vent line 29 is connected to bunker 30 and has its outer end provided with a simple filter 31 and an underpressure member 32, such as e.g. a fan.

The top side of the bunker 30 is provided with a suspension 33 in which a weighing member 34 is received in such a way that very accurate weighings can be performed. A discharge valve 35 is mounted in the bottom side of the bunker 30, by which a weighed-off amount of flour can be discharged into e.g. a dough tub to be placed underneath it.

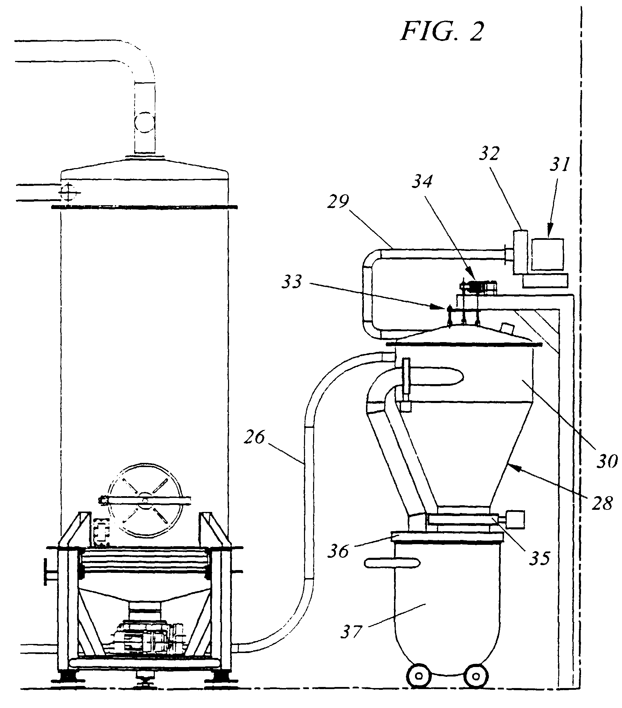

Fig. 2 illustrates a further embodiment of the weighing and discharging member 28, in which the bottom side has, in addition to the discharge valve 35, a cap 36 intended to connect to a dough tub 37 to be positioned underneath the weighing and discharging member 28. A suction line 38 connects to the cap 36 and is connected to fan 32 and filter 31 through the top part of bunker 30 and line 29. During the discharge of the weighed-off amount of flour into the dough tub, the blown-off flour can be removed and be received in the filter.

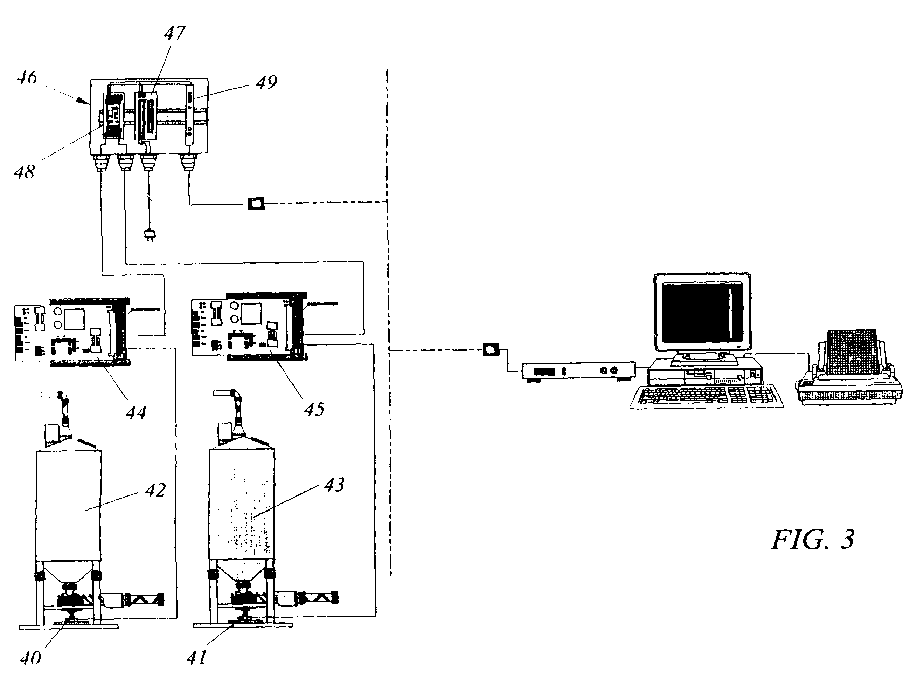

Fig. 3 shows schematically an arrangement for transferring the measuring data from the weighing members 40, 41 of the containers 42, 43. The measuring signals are supplied to modules 44, 45 in which the analog signals are converted into digital signals, which are transferred to a processing/control unit 46, e.g. at one or a number of more predetermined points in time. This unit 46 comprises at least a feed part 47, the actual processing/control part 48 and a modem 49.

Subsequently, the measuring data can be, e.g. through the telephone net 50, transferred to the stock control system of the bulk supplier. In the given example, again a modem 51 and a processing/control unit 52 is arranged at the bulk supplier's, as well as a printer for e.g. printing addresses, amounts, types of flour and the routes to be followed with the bulk transport vehicles.

With the help of an automated calling program, the bulk supplier can collect the measuring data at all the small-scale consumers, but it is also possible, that the data from the small-scale consumers are automatically sent to an electronic mail address of the bulk supplier, for example.

## Claims

1. Device for bulk delivery of ground or granular products is provided, comprising at least one container, one bearing frame for the container, a filling opening, a vent opening, a discharge opening and means of transport connected to said discharge opening for moving the product(s) further from said device, characterized in that the container is composed of a bottom part having the discharge opening, a top part having the filling opening and the vent opening, the intermediate part situated between bottom and top part being composed of one or more connecting intermediate sections, which can have a number of different lengths.

2. Device according to claim 1, characterized in that the device rests on the bearing frame with the intermediate part.

3. Device according to claim 2, characterized in that a flexible connection is mounted between the bottom part and the subsequent intermediate part.

4. Device according to claim 3, characterized in that a number of connecting rods have been mounted between the bottom part and the subsequent intermediate part, the outer ends of the connecting rods being coupled to the bottom part and the subsequent intermediate part through damping means.

5. Device according to claims 3 and 4, characterized in that a vibrating member coupled to the bottom part of the container is provided and that a dose-measuring member is mounted between the discharging member and the further means of transport.

6. Device according to claims 1 - 5, characterized in that dampers are mounted between the bearing frame and the base on which the bearing frame has been positioned.

7. Device according to claims 1 - 6, characterized in that a weighing member is mounted between the bearing frame and the base on which the bearing frame has been positioned.

8. Device according to claim 7, characterized in that a cross work is provided near the bottom side of the bearing frame between the legs of said bearing frame, which is intended for being able to mount the weighing member in the centre below the container.

9. Device according to claims 7 and 8, characterized in that dampers are mounted between the bearing frame and the weighing member and/or between the weighing member and the base on which the bearing frame is positioned.

10. Device according to claims 1 - 9, characterized in that the means of transport connecting to the discharge opening of the container or containers comprise substantially pneumatic means of transport.

11. Device according to claims 1 - 11, characterized in that the device can comprise two or more different containers, having different diameters or not.

12. Device according to claims 1 - 11, characterized in that the device further comprises a weighing and discharging member which is connected to the discharge opening of the container or containers through the pneumatic means of transport.

13. Device according to claim 12, characterized in that the pneumatic means of transport operate with underpressure and are connected to the weighing and discharging member.

14. Device according to claims 12-13, characterized in that the weighing and discharging member consists of a container being provided with a filling opening, a connection for a pneumatic member operating with underpressure, said device having a metering valve in the bottom side and being suspended from a frame, with a weighing member being mounted between the container and the frame.

15. Device according to claims 12-14, characterized in that a screening cap is mounted at the bottom side of the weighing and discharging member, with means being provided for applying an underpressure underneath the cap.

16. Device according to claims 7-9 and 12-15, characterized in that one or more of the weighing members is/are connected to a control/processing unit, said control/processing unit being arranged to pass the measuring signals from the weighing members to a further processing unit, in a processed or non-processed state.

17. Transport vehicle for bulk delivery of ground or granular products to small-scale consumers, being provided with a container for the product, a connection for filling hose or filling tube and a compressor system for pressurized transport of the product, characterized in that the transport vehicle is further provided with a filtering member which can be connected to the vent opening of the container of a small-scale consumer.

18. Transport vehicle according to claim 17, characterized in that the filtering member is provided with an underpressure member.

19. Transport vehicle according to claims 17-18, characterized in that the filtering member is removably mounted on the transport vehicle.

20. Transport vehicle according to claims 17-19, characterized in that the transport vehicle is provided with a weighing device.

21. Method of setting up a system for bulk delivery of ground or granular products to small-scale consumers, in which the product of a transshipment is transported the small-scale consumer by means of a bulk transport vehicle, said process comprising at least the following steps:
- positioning one or more containers at the small-scale consumer's, the container or containers being adapted to the specific accommodation of each individual small-scale consumer;
- mounting a supply line and a vent line from the container or containers to a place accessible to the transport vehicle; and
- mounting a filter system (removable or not) on the transport vehicle, for connecting the vent line of the container or containers to.

22. Method of bulk delivery to small-scale consumer after having made the necessary provisions at the small-scale consumer's for being capable of receiving the flour in bulk, said method comprising at least the following steps:
- the weight of the contents of the container or containers at the small-scale consumers is measured on predetermined points in time;
- the measuring data of the small-scale consumers are supplied to a processing device of the transshipment/transport company; and
- per predetermined group of small-scale consumers, one or more provisioning routes is determined on the basis of the measuring data.

23. Method according to claim 23, characterized in that the measuring data from a processing device of the small-scale consumer are provided automatically to a processing unit of the transshipment/transport company on one or more predetermined points in time, through a connection or network suitable for data transport.
